# EUROPEAN PATENT SPECIFICATION

(11) **EP 2 816 527 B1**
(45) Date of publication and mention of the grant of the patent: **05.12.2018**
(21) Application number: 13749055.3
(22) Date of filing: 15.02.2013
(51) Int. Cl.: G06T 5/50, G06T 5/40, G06T 5/00

(54) **METHOD AND DEVICE FOR PROCESSING DIGITAL IMAGE, AND COMPUTER-READABLE RECORDING MEDIUM**
VERFAHREN UND VORRICHTUNG ZUR VERARBEITUNG DIGITALER BILDER UND COMPUTERLESBARES AUFZEICHNUNGSMEDIUM
PROCÉDÉ ET DISPOSITIF DE TRAITEMENT D'UNE IMAGE NUMÉRIQUE, ET SUPPORT D'ENREGISTREMENT LISIBLE PAR UN ORDINATEUR

(30) Priority: 15.02.2012 KR 20120015544
(43) Date of publication of application: 24.12.2014
(73) Proprietor: Intel Corporation, Santa Clara, CA 95054 (US)
(72) Inventor: PARK, Min Je, Seongnam-si Gyeonggi-do 462-751 (KR)
(74) Representative: V.O.
(86) International application number: PCT/KR2013/001200
(87) International publication number: WO 2013/122419

(56) References cited:
- EP-A2- 2 395 748
- JP-A- 2008 227 697
- JP-A- 2010 109 948
- JP-A- 2010 134 915
- JP-A- 2011 188 277
- GROSCH ET AL: "Fast and robust high dynamic range image generation with camera and object movement", VISION, MODELING, AND VISUALIZATION 2006 : PROCEEDINGS, NOVEMBER 22 - 24, 2006, AACHEN, GERMANY ; [11TH INTERNATIONAL WORKSHOP VISION, MODELING, AND VISUALIZATION - VMV 2006], AKA; IOS PRESS, DE; USA, 22 November 2006 (2006-11-22), pages 1-9, XP002612400, ISBN: 978-3-89838-081-2
- JACOBS K ET AL: "Automatic HDRI generation of dynamic environments", INTERNATIONAL CONFERENCE ON COMPUTER GRAPHICS AND INTERACTIVE TECHNIQUES ARCHIVE ACM SIGGRAPH 2005 SKETCHES, ACM NEW YORK, NY, US, no. 43, 31 July 2005 (2005-07-31), page 1, XP002562044,
- JAEHYUN AN ET AL: "A multi-exposure image fusion algorithm without ghost effect", ACOUSTICS, SPEECH AND SIGNAL PROCESSING (ICASSP), 2011 IEEE INTERNATIONAL CONFERENCE ON, IEEE, 22 May 2011 (2011-05-22), pages 1565-1568, XP032001125, DOI: 10.1109/ICASSP.2011.5946794 ISBN: 978-1-4577-0538-0
- YOUNG-SU MOON ET AL: "A simple ghost-free exposure fusion for embedded HDR imaging", CONSUMER ELECTRONICS (ICCE), 2012 IEEE INTERNATIONAL CONFERENCE ON, IEEE, 13 January 2012 (2012-01-13), pages 9-10, XP032124742, DOI: 10.1109/ICCE.2012.6161713 ISBN: 978-1-4577-0230-3
- TAE-HONG MIN ET AL: "Histogram based ghost removal in high dynamic range images", MULTIMEDIA AND EXPO, 2009. ICME 2009. IEEE INTERNATIONAL CONFERENCE ON, IEEE, PISCATAWAY, NJ, USA, 28 June 2009 (2009-06-28), pages 530-533, XP031510806, ISBN: 978-1-4244-4290-4

## Description

### [Technical Areas]

The present invention relates to the method and device for processing digital image, and computer-readable recording medium, and more particularly, to the method and device for processing digital image and computer-readable recording medium which can compensate the motion of an imaging device and a subject and remove a ghost effect.

### [Prior Art]

The dynamic range (DR) of digital image is defined as the ratio between the brightest pixel value and the darkest pixel value in an image. Human visual system (HVS) can handle much higher dynamic ranges than general digital cameras or monitors. Therefore, the existing imaging devices can't capture or display an image recognized by humans. As such, there is a clear need for image processing with larger dynamic range than the range that can be handled by the existing imaging devices and such an image is called the high dynamic range (HDR) image.

The technology to generate the HDR image described above can be referred to as a technology that expands the dynamic range (DR) by synthesizing the multiple images with mutually different levels of exposure. A high dynamic range (HDR) image can be obtained by synthesizing many sheets of short exposure image (SEI) obtained through short exposure on the basis of bright area and long exposure image (LEI) obtained through long exposure on the basis of dark area. In other words, when the difference in intensity among different areas within an image is big, a generally clear image can be obtained from an image with big difference in brightness by obtaining an image through short exposure for a bright area and obtaining an image through long exposure for a dark area.

In order to synthesize a plurality of images this way, multiple images must be aligned and the brightness streaking between two images at a stitched border area must be appropriate. And artifact should not be generated among mutually different areas at a border area and should look natural. However, when images with noise are synthesized or there is active motion, it is very difficult to synthesize them without causing motion artifact while not deteriorating the dynamic range (DR) of images.

Since short exposure image (SEI) and long exposure image (LEI) can't be the same if a subject or a camera moves, a ghost effect can occur when synthesizing HDR images.
Such ghost effect refers to a phenomenon of showing overlapped images due to the motion of a subject when merging or stitching the images in the motion of a subject between images in multiple images.

In order to solve the ghost effect described above in the past, an invention titled "APPARATUS AND METHOD OF CREATING HIGH DYNAMIC RANGE IMAGE EMPTY GHOST IMAGE BY USING FILTERING" with the publication number of 10-2011-0136152 published on December 21, 2011 (equivalent to EP2395748) was disclosed.

The previous invention described above relates to the device and method of generating HDRI without the ghost based on filtering, wherein the ghost effect occurring when making one sheet of HDRI out of many sheets of LDRI can be prevented by not specifically determining a ghost area in an image but defining a ghost area by probability based on the global transfer function which is a relation function concerning the concentration of many frames.

However, since a large number of exposure images are required to calculate the probability function between the continued exposure images to remove a ghost area in the prior art described above, there is a problem of deteriorating operation speed to extract HDR image.

Reference is further made to XP002612400, GROSCH ET AL: "Fast and robust high dynamic range image generation with camera and object movement", 2006, to XP002562044, JACOBS ET AL: "Automatic HORI generation of dynamic environments", 2005 and to XP032001125, AN ET AL: "A multi-exposure image fusion algorithm without ghost effect", 2011.

GROSCH et al. describes a method for generating an HDR image using a sequence of photographs with different exposure times which are combined to a single image. (Abstract). For each pair of consecutive images it is tested if the real color in the second image is well approximated with the color predicted from the first image taking into account the different exposure times for these images. Pixels for which a significant difference is found are marked in an error map as invalid. These pixels are not used when the HDR image is combined from the image sequence. Instead the pixels from a reference image are used. The reference image is selected by counting the number of underexposed and saturated pixels only in invalid regions marked in the error map. The image with the lowest number is selected as the reference image. (section 3.2).

JACOBS et al. specifies a method wherein each pixel value in an HDRI is a weighted average of the matching pixel values in the N LDR's. The calculation of the weight is based on a variance image VI and an uncertainty image UI.A Variance Image (VI) is constructed by calculating per pixel j the weighted variance over the transformed radiance values in the N LDR's Ln(j). The uncertainty image is based on an entropy measure. By applying a threshold, dilation and erosion on VI and UI, motion regions containing HCM and/or LCM are detected. For all pixels outside a motion region, HDRI generation proceeds in the conventional manner. Pixels inside a motion region are substituted by the radiance value in the chosen LDRI.

AN et al specifies selecting from multi-exposure images the image with the least saturation as a reference image. Then the weight for each pixel is adjusted by using a photometric relation and ZNCC (the zero mean normalized cross correlation factor between the given and reference image).

### [Disclosure of the invention]

The objective of the present invention is to solve all of the problems described above.

Further, its other objective is to generate a clear image without an image overlap or a ghost when producing the HDR image even if there is a complex motion on a subject.

Further, it is still another objective to be able to remove a ghost area with a small number of exposure images.

The representative configuration of the present invention to achieve the objectives described above is as follows:
One embodiment of the present invention provides a method of processing a digital image as claimed in claim 1.

Still another embodiment of the present invention provides a device for processing a digital image as claimed in claim 6.

In addition, the present invention further provides the computer readable recording medium as claimed in claim 9.

Even if there is a complex motion on a subject, the present invention may obtain a clear image without an image overlap or a ghost when producing the HDR image.

It is also possible to enhance match rate at a scene of active motion. Thereby, motion artifact and decrease in dynamic range can be reduced in an HDR image.

Further, numerous exposure images are not required to calculate the probability function between the continued exposure images to remove a ghost area and rather, it can be done with as few as two sheets of exposure images.

### [Brief explanation of the drawings]

FIG. 1 is a block diagram illustrating the schematic composition of a digital image processing device in accordance with a preferred embodiment example of the present invention.
FIG. 2 is a block diagram illustrating the schematic composition of a histogram comparing member in accordance with a preferred embodiment example of the present invention.
FIG. 3 is a drawing illustrating the distribution of histogram depending on the brightness of an image.
FIG. 4 is a drawing to explain a digital image processing method in accordance with a preferred embodiment example of the present invention.
FIG. 5a is a drawing showing an example of low exposure image used to synthesize HDR images.
FIG. 5b is a drawing showing an example of normal exposure image used to synthesize HDR images.
FIG. 5c is a drawing showing an example of high exposure image used to synthesize HDR images.
FIG. 6a is a drawing showing an image from the synthesis of the images disclosed in FIGs. 5a to 5c according to the HDR image synthesizing method of the prior art.
FIG. 6b is a drawing showing an HDR image generated by synthesizing reference image and masking image in accordance with a preferred embodiment example of the present invention.

### [Best possible embodiment example of the invention]

The preferred embodiments of the present invention will be explained in detail referring to the drawings to ensure that a person having ordinary skills in the art to which this invention belongs to can implement the present invention.

### Composition of the Whole Device:

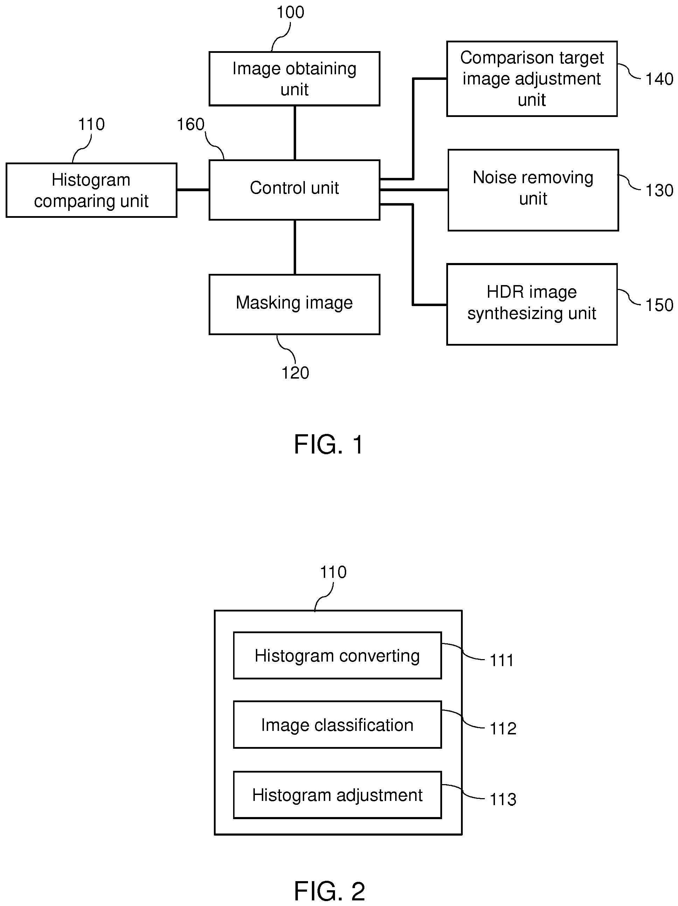

FIG. 1 is a block diagram illustrating the schematic composition of a digital image processing device in accordance with a preferred embodiment example of the present invention.

Referring to FIG. 1, the device for processing digital image in accordance with an embodiment example of the present invention includes an image obtaining unit 100, a histogram comparison unit 110, a masking image obtaining unit 120, a noise removing unit 130, a comparison target image adjustment unit 140, an HDR image synthesizing unit 150 and a control unit 160.

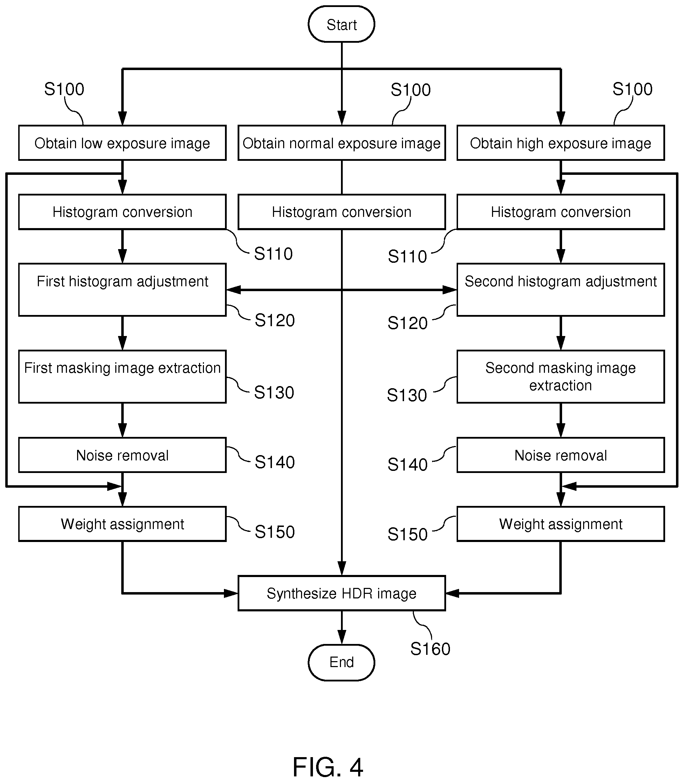

A plurality of images with different exposure times are obtained through the image obtaining unit 100. According to one embodiment example explained below referring to FIG. 4, the image obtained through the image obtaining unit 100 can be a low exposure image which is generally dark due to short exposure time, a high exposure image which is generally bright due to long exposure time, and a normal exposure image with a brightness between the low exposure image and the high exposure image.
However, the present invention is not limited to such and can be applied when two or more different images such as low exposure image and high exposure image are obtained through the image obtaining unit 100.

The histogram comparison unit 110 converts the image obtained through the image obtaining unit 100 to histograms and sets a reference image among the converted images and obtains an adjustment reference image by transforming the brightness of the reference image to match the reference image with the histogram of other image obtained through the image obtaining unit 100

The composition of the histogram is explained more in detail referring to FIG. 2.

FIG. 2 is a block diagram illustrating the schematic composition of a histogram comparing unit in accordance with a preferred embodiment example of the present invention.

Referring to FIG. 2, the histogram comparison unit 110 includes a histogram converting unit 111, an image classification unit 112 and a histogram adjustment unit 113.

The above histogram converting unit 111 converts a plurality of images obtained through the histogram comparison unit 110 to a histogram.

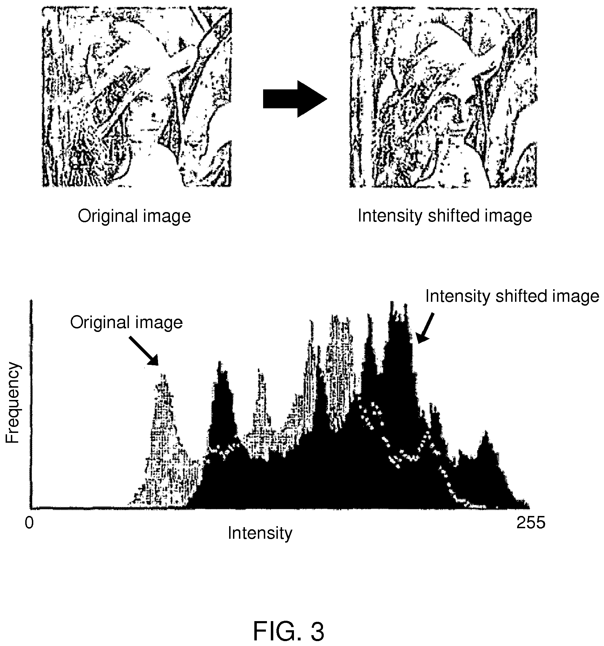

A histogram shows the brightness of each pixel in a digital image signal which has been classified and organized based on their level and means the distribution of an image at the level of pixels. If an image is generally dark, the histogram shows more distribution on dark values (values close to 0), whereas if an image is generally bright, the histogram shows more distribution on bright values (values close to 255). FIG. 3 is a drawing illustrating the distribution of a histogram according to the brightness of an image and it can be confirmed by referring to FIG. 3 that if the original image is brightened, the distribution of pixels on the histogram is concentrated on brighter values. Therefore, the histogram is appropriate to show the overall nature of an image rather than the detailed information about the elements making up a subject in an image. And the histogram has such strengths as relatively being unaffected by a geometric transformation such as the rotation or motion of a subject and the simplicity of implementation algorithm.

The image classification unit 112 sets one image out of a plurality of images converted into the histogram through the histogram converting unit 111 as a reference image. The reference image can be selected from any of the low exposure image, the high exposure image or the normal exposure image but it is desirable to be set up as an image with the even distribution of pixels on the histogram.

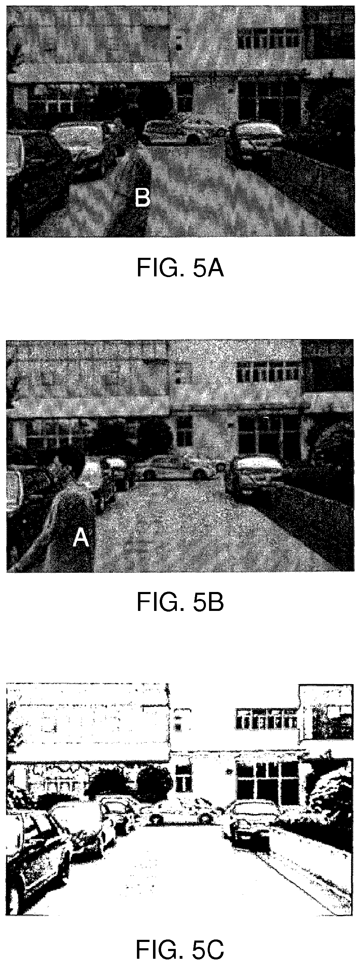

FIG. 5a is a drawing illustrating one example of a low exposure image used to synthesize HDR images, FIG. 5b is a drawing illustrating one example of a normal exposure image used to synthesize HDR images, and FIG. 5c is a drawing illustrating one example of a high exposure image used to synthesize HDR images. Referring to the embodiment examples disclosed in FIGs. 5a to 5c, it is more desirable to set up the normal exposure image with even distribution of pixels on dark areas and bright areas as the reference image than to set up the low exposure image or the high exposure image as the reference image.

Once the reference image has been set up, the histogram adjustment unit 113 transforms the brightness of the reference image to ensure that the histogram distribution of the reference image have the deployment of pixels similar to the histogram distribution of other images than the reference image obtained through the image obtaining unit 100. At this time, other image which is compared to the reference image is defined as a comparison target image. Therefore, if the normal exposure image is set up as the reference image among the images illustrated in FIGs. 5a to 5c, the low exposure image and the high exposure image can be the comparison target images. The reference image with an image intensity shifted to ensure that the histogram distribution of the reference image is similar to the histogram distribution of the comparison target images is referred to as the adjustment reference image.

The adjustment reference image can be generated by modifying the brightness of the reference image through the histogram comparison unit 110 using the method described above.

The above masking image obtaining unit 120 compares the adjustment reference image with the comparison target image obtained from the image obtaining unit 100 and generates a masking image which corresponds to the difference between the two images. The masking image can make brightness to be determined by comparing the difference between the adjustment reference image and the comparison target image for each pixel, for example as a black and white image. Taking an example to explain FIGs. 5a to 5c, if the normal exposure image is set up as the adjustment reference image and the low exposure image is set up as the comparison target image, the masking image of the areas corresponding to the area (A) where a person is located in the normal exposure image and the area (B) where a person is located in the low exposure image can be expressed darkly since the area (A) and the area (B) are different from each other, and the masking image of the remaining areas can be brightly expressed since the difference between the two is small. Therefore, if the masking image is applied to the low exposure image thereafter, the areas A and B can be masked and deleted and thus only the other areas can remain. Further, if the normal exposure image is set up as the adjustment reference image and the high exposure image is set up as the comparison target image, the masking image of the area corresponding to the area (A) where a person is located in the normal exposure image can be expressed darkly since only the area (A) is different, and the masking image of the remaining areas can be brightly expressed.

Therefore, if the masking image is applied to the high exposure image thereafter, the area A can be masked and deleted and thus only the other areas can remain.

When the reference image and the comparison image are directly compared by generating the masking image using the adjustment reference image which is generated by modifying the brightness of the reference image to a level similar to the comparison target image, the possibility of recognizing the different caused by the brightness of natural light or lighting as the difference caused by the change of an object can be excluded and a masking image can be generated by determining only the change of an object in both images.

Because the masking image obtained through the masking image obtaining unit 120 is an image obtained by comparing the adjustment reference image with the comparison target image at the binary level, the noise can be severe. The noise removing unit 130 removes the noise happened in the masking image. More specifically, the noise removing unit 130 can smooth out the boundary of an object shown in an image by repeating erosion operation and dilation operation at least once.

The erosion operation and the dilation operation is an algorithm used in filling up the holes or removing the noise within a binary image in processing the image, and the erosion operation is an operation that peels off a layer from a subject or particle or removes an unnecessary pixel or particle from the image In other words, if there is any empty area around the original image of the current pixel, it removes the current pixel of a new image. The dilation operation is an operation that adds a layer to an object or particle by expanding some particles. In other words, if any pixel exists around the original image of the current pixel, it fills the current pixel of a new image. The dilation operation restores the eroded particle to the original size through this process.

The erosion operation and the dilation operation, which are a part of the operation group known as morphological operation, are the neighboring operations which define the value of each pixel depending on the geometric relation with a neighboring pixel. The erosion operation and the dilation operation are classified into opening and closing, and the opening is a method of performing the dilation operation after performing the erosion operation, and the closing is a method of performing the erosion operation after performing the dilation operation. The opening can be considered as an algorithm that removes noise, whereas the closing can be considered as an algorithm that fills up the holes of an image.

In accordance with one embodiment example of the present invention, the erosion operation and the dilation operation can be achieved by the opening but are not limited to this and the noise removal can be achieved with the closing method.

After removing the noise of a masking image through the noise removing unit 130, the comparison target image adjustment unit 140 generates the adjustment comparison target image by applying the masking image to the comparison target image, and determines the synthesizing ratio of the adjustment comparison target image, i.e., the weight of the adjustment comparison target image, when synthesizing the HDR image. The weight can be determined as a value for each pixel comprising the comparison target image which is different from each other, and this value can be calculated as the difference obtained by comparing the adjustment reference image with the comparison target image on the histogram. In other words, the weight can be set up as the value obtained by normalizing the value obtained from the comparison of each of the pixels, which correspond to the adjustment reference image and the comparison target image, on the histogram to a value between 0 and 1.

In such a case, the bigger the difference between the adjustment reference image and the comparison target image is, the lower the ratio of the adjustment comparison target image being synthesized when synthesizing HDR image will be as the weight is converged to 0, whereas the smaller the difference between the adjustment reference image and the comparison target image is, the higher the ratio of the adjustment comparison target image being synthesized when synthesizing HDR image will be as the weight is converged to 1. This means that if the difference between the adjustment reference image and the comparison target image is bigger, this is considered as an afterimage and the operation is conducted in the direction to remove this when synthesizing HDR image. The ghost effect, which leaves an afterimage on the finally synthesized HDR image, can be prevented with this method. The HDR image synthesizing unit 150 synthesizes a final HDR image by synthesizing the reference image and the adjustment comparison target image. In synthesizing the HDR image, the weight of the reference image can be set up to 1, and the weight of the adjustment comparison target image can be set up to the weight calculated by the comparison target image adjustment unit 140.

The control unit 160 carries out the function of controlling the data flow among the image obtaining unit 100, the histogram comparison unit 110, the masking image obtaining unit 120, the noise removing unit 130, the comparison target image adjustment unit 140, the HDR image synthesizing unit 150.

In other words, the control unit 160 carries out a control function to ensure that each performs its own function at the image obtaining unit 100, the histogram comparison unit 110, the masking image obtaining unit 120, the noise removing unit 130, the comparison target image adjustment unit 140, the HDR image synthesizing unit 150 by controlling the data flow to or from outside or among the various components of a digital image processing device.

The illustrated components can be embodied as multiple independent hardware or one integrated hardware. For example, each of the image processing unit can be embodied as 3S FPGA (Field Programmable Gate Array) or GA (Gate Array).
In another embodiment example, the illustrated components can be embodied as computer and programmed code. In still another embodiment example, the illustrated components can be embodied as the digital signal processing processor within an analog camera, digital camera or camcorder and the command sets executed by this.

FIG. 4 is a drawing to explain a digital image processing method in accordance with a preferred embodiment example of the present invention.

Referring to FIG. 4, the digital image processing method in accordance with one embodiment example of the present invention can be started from the step of obtaining a plurality of images with different exposure times (S100) through the image obtaining unit 100. For example, the plurality of images can be a low exposure image, a high exposure image and a normal exposure image but are not limited to them, and if two or more images with different exposure time including low exposure image and high exposure image exist, the digital image processing method of the present invention can be applied.

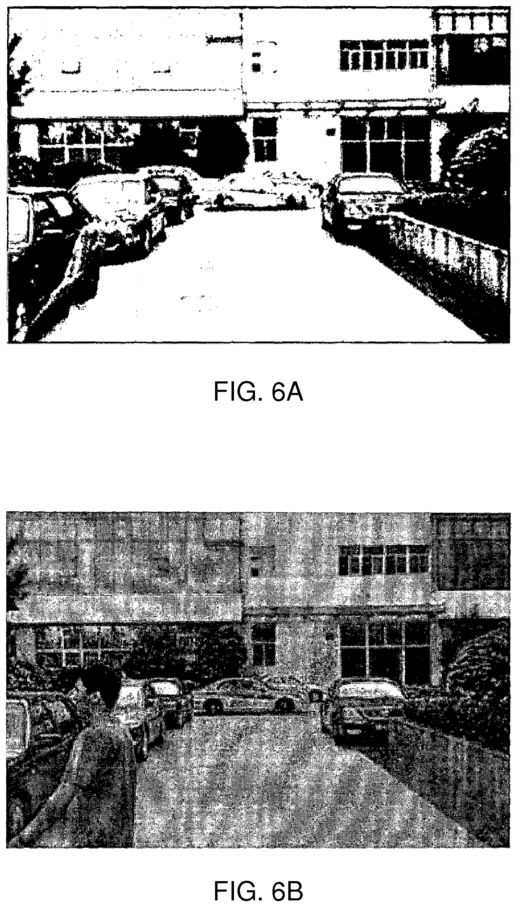

Referring to the images shown on FIGs. 5a to 5c for explanation, since a person is located at the center of the image in case of a low exposure image shown in FIG. 5a, a person is located on the left side of the image in case of a normal exposure image shown in FIG. 5b, and a person is not visible in case of a high exposure image shown in FIG. 5c, it can be reasoned from them that the person is moving from the center to the left. Because the low exposure image, the normal exposure image and the high exposure image were synthesized simply when synthesizing HDR images in the prior art, there was a problem of not being able to obtain a clear HDR image due to the remaining afterimage when an moving object exited in an image as shown FIGs. 5a to 5c. FIG. 6a is a drawing showing an image from the synthesis of the images disclosed in FIGs. 5a to 5c according to the HDR image synthesizing method of the prior art. As shown in FIG. 6a, it was confirmed that a clear HDR image can't be obtained since a moving person's afterimage remains in the finally synthesized image.

In order to solve this problem, the present invention processes the plurality of images by converting them to histograms through the histogram converting unit 111 (S110). After converting each of the plurality of images to a histogram, one of those images is set up as the reference image. At this time, pixels are more likely to be concentrated on a dark area on the histogram in case of the low exposure image, whereas pixels are more likely to be concentrated on a bright area on the histogram in case of the high exposure image. Further, pixels are more likely to be distributed evenly throughout the whole area including dark areas and bright areas on the histogram in case of the normal exposure image.

Therefore, ideally, the normal exposure image is set up as the reference image, and the intensity of the normal exposure image is shifted to ensure that the histogram distribution of the normal exposure image be similar to the histogram distribution of the low exposure image or the high exposure image at a level of similarity above the predetermined level (S120). The reason why the normal exposure image is set up as the reference image is because it is considered to have more abundant information compared to other images since pixels are highly likely to be distributed widely on dark areas and bright areas in this image. Therefore, it is because such errors as staircase effect which can happen when low information image is matched to high information image can be reduced if the histogram distribution of the normal exposure image is modified to be similar to the histogram distribution of the low exposure image or the high exposure image. However, if the subject imaging environment is a relatively bright place, the high exposure image can include relatively more information compared to the normal exposure image. In this case, the histogram distribution of the high exposure image can be modified to be similar to the histogram distribution of the low exposure image or the normal exposure image by setting up the high exposure image as the reference image.

In the embodiment example illustrated in FIG. 4, adjusting the histogram distribution of the normal exposure image, which is the reference image, to be similar to the histogram distribution of the low exposure image is defined as the first histogram adjustment, and adjusting the histogram distribution of the normal exposure image to be similar to the histogram distribution of the high exposure image is defined as the second histogram adjustment.

Of course, since the present invention can be embodied when the reference image and at least one comparison target image exist, unlike the embodiment example disclosed in FIG. 4, it can also be embodied by setting up one of the two images as a reference image and setting up the other image as the comparison target image when only low exposure image and high exposure image exist.

Since the pixel difference caused by brightness between the adjustment reference image and the comparison target image can be ignored due to the transformation of the reference image, the pixel difference between the adjustment reference image and the comparison target image can be judged as the difference caused by the motion of an object. Therefore, a masking image can be generated from the difference between the comparison target image and the adjustment reference image using the adjustment reference image as masking (S130). Therefore, the masking image can be considered as an image showing only those pixels in which there is a difference between the adjustment reference image and the comparison target image due to the motion of an object. In the embodiment example illustrated in FIG. 4, the image generated by masking the low exposure image with the adjustment reference image is defined as the first masking image, and the image generated by masking the high exposure image with the adjustment reference image is defined as the second masking image.
Because the masking image obtained through the masking image obtaining unit 120 is an image obtained by comparing the adjustment reference image with the comparison target image at the binary level, the noise may be severe. Therefore, the noise occurred in the masking image is removed through the noise removing unit 130 (S140). More specifically, the noise removal described above can be achieved by iterating erosion operation and dilation operation at least once. However, such a noise removing step is not necessarily required.

After removing the noise of a masking image through the noise removing unit 130, the adjustment comparison target image is generated by applying the masking image to the comparison target image through the comparison target image adjustment unit 140, and a weight is assigned to the adjustment comparison target image (S150). The weight can be obtained by normalizing the difference obtained by comparing the adjustment reference image with the comparison target image on the histogram to a value between 0 and 1. In such a case, the bigger the difference between the adjustment reference image and the comparison target image is, the weight is converged to 0, whereas the smaller the difference between the adjustment reference image and the comparison target image is, the weight is converged to 1.

Finally, a HDR image is generated by synthesizing the reference image and the adjustment comparison target image through the HDR image synthesizing unit 150 (S170). In the end, an HDR image is embodied by using the pixels of the reference image as they are for the pixels corresponding to the moving part of an object and synthesizing images with different exposure levels for the other areas when generating the HDR image.

FIG. 6b is a drawing showing an HDR image which has been finally synthesized using the method described above. When FIG. 6b is compared with FIG. 6a which has been generated by the HDR image synthesizing method of the prior art, it can be confirmed that a clear image with almost no lingering afterimage can be obtained even though a person has moved. Therefore, if the present invention is used, a clear HDR image without any ghost effect such as overlapping in an area with the motion of an object can be obtained as shown in the image illustrated FIG. 6a.

The embodiments in accordance with the present invention described so far can be embodied in the form of a program instruction that can be implemented through various computer components and recorded on a computer readable recording medium. The computer readable recording medium can include program instruction, data file, data structure, etc. separately or in combination. The program instruction recorded on said computer readable recording medium can be one designed and configured specifically for the present invention or one that is recommended as it is well known to a person having ordinary skills in the computer software area.
The examples of the computer readable recording medium include the hardware devices configured specially to store and run instruction like magnetic media such as hard disk, floppy disk and magnetic tape, optical recording media such as CD-ROM and DVD, magneto-optical media like floptical disk, ROM, RAM and flash memory. The examples of program instruction include high level language codes that can be run by a computer using such means as interpreter as well as machine language codes created by a compiler. The hardware device can be formed to run with one or more software module to carry out the processing of the present invention and the same applies to the reverse.

Though the present invention has been described so far with particular items such as specific components and by limited embodiments and drawings, they have been provided merely to facilitate the overall understanding on the present invention and the present invention is not limited by the embodiments described above and a person having ordinary skill in the art to which the present invention belongs may be able to attempt various corrections and modifications in these items.

### [Possibility of industrial use]

The present invention can be used for digital image processing device, etc.

## Claims

1. A method of processing a digital image, comprising:
(a) obtaining (S100) a plurality of images including a low exposure image, a normal exposure image and a high exposure image;
(b) converting (S110) the plurality of images into histograms;
(c) setting the normal exposure image as a reference image and the low exposure image and the high exposure image as a first and a second comparison target image respectively;
(d) adjusting (S120) a distribution of the histogram of the reference image to be similar to a distribution of the histogram of the first comparison target image to produce a first adjusted reference image and a distribution of the histogram of the reference image to be similar to a distribution of the histogram of the second comparison target image to produce a second adjusted reference image;
(e) producing (S130) a first masking image corresponding to a difference for each pixel between the first adjusted reference image and the first comparison target image and a second masking image corresponding to a difference for each pixel between the second adjusted reference image and the second comparison target image;
(f) applying the first masking image to the first comparison target image to produce a first adjusted comparison target image, and the second masking image to the second comparison target image to produce a second adjusted comparison target image, the first and the second adjusted comparison target images being obtained from the first and the second comparison target image respectively by masking and deleting therein those areas that are different from the corresponding to those of the first and second adjusted reference images respectively according to the first and the second masking images, so that only the other areas of the first and second comparison target images remain in the first and second adjusted comparison target images; and
(g) assigning (S150) a respective weight to the first and the second adjusted comparison target images and then combining the reference image and the first and the second adjusted comparison target image according to their respective assigned weight to produce a high dynamic range, HDR, image, wherein the respective weights are determined as a difference value of each pixel, which is obtained by comparing the first and the second adjusted reference images and the first and the second comparison target image respectively, and are normalized to be a value between 0 and 1 on the basis of the histograms of these images and wherein the weight converges to 0 as the difference between an adjusted reference image and the corresponding comparison target image is the larger and the weight converges to 1 as the difference between an adjusted reference image and the corresponding comparison target image is the smaller.

2. The method of Claim 1, wherein the step (c) comprises setting an image, in which pixels are relatively uniformly arranged from a dark area to a bright area on a histogram, as the reference image.

3. The method of Claim 1, wherein the masking image is an image which represents a difference in brightness between the adjusted reference image and the comparison target image by comparing the adjusted reference image and the comparison target image for each pixel.

4. The method of Claim 1, further comprising removing noise in the masking image.

5. The method of Claim 4, wherein removing the noise comprises processing an image by repeating at least once an erosion operation, a dilation operation and a smoothing operation.

6. An apparatus for processing a digital image, comprising:
an image obtaining unit (100) configured to obtain a plurality of images, including a low exposure image, a normal exposure image and a high exposure image;
a histogram conversion unit (111) configured to convert the plurality of images into histograms;
an image classification unit (112) configured to set the normal exposure image as a reference image and the low exposure image and the high exposure image as a first and a second comparison target image respectively;
a histogram adjustment unit (113) configured to adjust a distribution of the histogram of the reference image to be similar to a distribution of the histogram of the first comparison target image to produce a first adjusted reference image and to adjust a distribution of the histogram of the reference image to be similar to a distribution of the histogram of the second comparison target image to produce a second adjusted reference image;
a masking image obtaining unit (120) configured to compare a difference for each pixel between the first adjusted reference image and the first comparison target image to produce a first masking image and to compare a difference for each pixel between the second adjusted reference image and the second comparison target image to produce a second masking image;
a comparison target image adjusting unit (140) configured to apply the first masking image to the first comparison target image to produce a first adjusted comparison target image and to apply the second masking image to the second comparison target image to produce a second adjusted comparison target image, the first and the second adjusted comparison target images being obtained from the first and the second comparison target image respectively by masking and deleting therein those areas that are different from the corresponding to those of the first and second adjusted reference images respectively, according to the first and the second masking images respectively, so that only the other areas of the first and second comparison target images remain in the first and second adjusted comparison target images; and wherein the comparison target image adjusting unit (140) further assigns a respective weight to the adjusted comparison target images ; and
an HDR image synthesizing unit (150) configured to combining the reference image and the respective adjusted comparison target images according to their respective assigned weight to produce an HDR image, wherein the respective weights are determined as a difference value of each pixel, which is obtained by comparing the first and the second adjusted reference images and the first and the second comparison target image respectively, and are normalized to be a value between 0 and 1 on the basis of the histograms of these images and wherein the weight converges to 0 as the difference between the adjusted reference image and the comparison target image is the larger and the weight converges to 1 as the difference between the adjusted reference image and the comparison target image is the smaller.

7. The apparatus of Claim 6, wherein the image classification unit (112) sets an image, in which pixels are relatively uniformly arranged from a dark area to a bright area on a histogram, as the reference image.

8. The apparatus of Claim 6, wherein the masking image is an image which represents a difference in brightness between the adjusted reference image and the comparison target image by comparing the adjusted reference image and the comparison target image for each pixel.

9. A computer-readable recording medium comprising a computer program which, when executed by a computer, causes the computer to carry out the method of any one of Claims 1 to 5.

## Patentansprüche

1. Verfahren zur Verarbeitung eines Digitalbilds, die folgenden Schritte umfassend:
(a) Erlangen (S100) mehrerer Bilder, beinhaltend ein unterbelichtetes Bild, ein normalbelichtetes Bild und ein überbelichtetes Bild;
(b) Umwandeln (S110) der mehreren Bilder in Histogramme;
(c) Setzen des normalbelichteten Bilds als ein Referenzbild und des unterbelichteten Bilds und des überbelichteten Bilds als jeweils ein erstes und ein zweites Zielvergleichsbild;
(d) Anpassen (S120) einer Verteilung des Histogramms des Referenzbilds, um einer Verteilung des Histogramms des ersten Zielvergleichsbilds ähnlich zu werden, um ein erstes angepasstes Referenzbild zu erstellen, und einer Verteilung des Histogramms des Referenzbilds, um einer Verteilung des Histogramms des zweiten Zielvergleichsbilds ähnlich zu werden, um ein zweites angepasstes Referenzbild zu erstellen;
(e) Erstellen (S130) eines ersten Maskierungsbilds, das einer Differenz für jedes Pixel zwischen dem ersten angepassten Referenzbild und dem ersten Zielvergleichsbild entspricht, und eines zweiten Maskierungsbilds, das einer Differenz für jedes Pixel zwischen dem zweiten angepassten Referenzbild und dem zweiten Zielvergleichsbild entspricht;
(f) Anwenden des ersten Maskierungsbilds auf das erste Zielvergleichsbild, um ein erstes angepasstes Zielvergleichsbild zu erstellen, und des zweiten Maskierungsbilds auf das zweite Zielvergleichsbild, um ein zweites angepasstes Zielvergleichsbild zu erstellen, wobei das erste und das zweite angepasste Zielvergleichsbild jeweils aus dem ersten und dem zweiten Zielvergleichsbild erhalten werden, indem darin jene Gebiete maskiert und gelöscht werden, die sich jeweils gemäß dem ersten und dem zweiten Maskierungsbild von den unterscheiden, die denen des ersten und des zweiten angepassten Referenzbilds entsprechen, so dass nur die anderen Gebiete des ersten und des zweiten Zielvergleichsbilds in dem ersten und dem zweiten angepassten Zielvergleichsbild verbleiben; und
(g) Zuweisen (150) eines jeweiligen Gewichts an das erste und das zweite angepasste Zielvergleichsbild und dann Kombinieren des Referenzbilds und des ersten und des zweiten angepassten Zielvergleichsbilds gemäß deren jeweils zugewiesenen Gewichten, um ein Bild mit hohem Dynamikumfang bzw. HDR-Bild zu erstellen, wobei die jeweiligen Gewichte als ein Differenzwert von jedem Pixel bestimmt werden, welcher jeweils durch Vergleichen des ersten und des zweiten angepassten Referenzbilds mit dem ersten und dem zweiten Zielvergleichsbild erhalten wird, und auf Grundlage der Histogramme dieser Bilder auf einen Wert zwischen 0 und 1 normiert werden und wobei das Gewicht gegen 0 konvergiert, wenn die Differenz zwischen einem angepassten Referenzbild und dem entsprechenden Zielvergleichsbild die größere ist, und das Gewicht gegen 1 konvergiert, wenn die Differenz zwischen einem angepassten Referenzbild und dem entsprechenden Zielvergleichsbild die kleinere ist.

2. Verfahren nach Anspruch 1, wobei der Schritt (c) Setzen eines Bilds, in welchem Pixel in einem Histogramm relativ gleichmäßig von einem dunklen Gebiet zu einem hellen Gebiet angeordnet sind, als das Referenzbild umfasst.

3. Verfahren nach Anspruch 1, wobei das Maskierungsbild ein Bild ist, welches einen Helligkeitsunterschied zwischen dem angepassten Referenzbild und dem Zielvergleichsbild repräsentiert, indem das angepasste Referenzbild und das Zielvergleichsbild für jedes Pixel verglichen werden.

4. Verfahren nach Anspruch 1, ferner umfassend Entfernen von Rauschen in dem Maskierungsbild.

5. Verfahren nach Anspruch 4, wobei Entfernen des Rauschens Verarbeiten eines Bilds durch mindestens einmaliges Wiederholen einer Erosionsoperation, einer Streckoperation und einer Glättungsoperation umfasst.

6. Vorrichtung zum Verarbeiten eines Digitalbilds, Folgendes umfassend:
eine Bilderlangungseinheit (100), die ausgelegt ist zum Erlangen mehrerer Bilder, beinhaltend ein unterbelichtetes Bild, ein normalbelichtetes Bild und ein überbelichtetes Bild;
eine Histogrammumwandlungseinheit (111), die ausgelegt ist zum Umwandeln der mehreren Bilder in Histogramme;
eine Bildklassifikationseinheit (112), die ausgelegt ist zum Setzen des normalbelichteten Bilds als ein Referenzbild und des unterbelichteten Bilds und des überbelichteten Bilds als jeweils ein erstes und ein zweites Zielvergleichsbild;
eine Histogrammanpasseinheit (113), die ausgelegt ist zum Anpassen einer Verteilung des Histogramms des Referenzbilds, um einer Verteilung des Histogramms des ersten Zielvergleichsbilds ähnlich zu werden, um ein erstes angepasstes Referenzbild zu erstellen, und zum Anpassen einer Verteilung des Histogramms des Referenzbilds, um einer Verteilung des Histogramms des zweiten Zielvergleichsbilds ähnlich zu werden, um ein zweites angepasstes Referenzbild zu erstellen;
eine Maskierungsbilderhalteeinheit (120), die ausgelegt ist zum Vergleichen einer Differenz für jedes Pixel zwischen dem ersten angepassten Referenzbild und dem ersten Zielvergleichsbild zum Erstellen eines ersten Maskierungsbilds, und zum Vergleichen einer Differenz für jedes Pixel zwischen dem zweiten angepassten Referenzbild und dem zweiten Zielvergleichsbild zum Erstellen eines zweiten Maskierungsbilds;
eine Zielvergleichsbild-Anpasseinheit (140), die ausgelegt ist zum Anwenden des ersten Maskierungsbilds auf das erste Zielvergleichsbild, um ein erstes angepasstes Zielvergleichsbild zu erstellen, und zum Anwenden des zweiten Maskierungsbilds auf das zweite Zielvergleichsbild, um ein zweites angepasstes Zielvergleichsbild zu erstellen, wobei das erste und das zweite angepasste Zielvergleichsbild jeweils aus dem ersten und dem zweiten Zielvergleichsbild erhalten werden, indem darin jene Gebiete maskiert und gelöscht werden, die sich jeweils gemäß dem ersten und dem zweiten Maskierungsbild von den nterscheiden, die denen des ersten und des zweiten angepassten Referenzbilds entsprechen, so dass nur die anderen Gebiete des ersten und des zweiten Zielvergleichsbilds in dem ersten und dem zweiten angepassten Zielvergleichsbild verbleiben; und
wobei die Zielvergleichsbild-Anpasseinheit (140) ferner den angepassten Zielvergleichsbildern ein jeweiliges Gewicht zuweist, und
eine HDR-Bild-Synthetisiereinheit (150), die ausgelegt ist zum Kombinieren des Referenzbilds und des jeweiligen angepassten Zielvergleichsbilds gemäß deren jeweils zugewiesenen Gewichten, um ein HDR-Bild zu erstellen, wobei die jeweiligen Gewichte als ein Differenzwert von jedem Pixel bestimmt werden, welcher jeweils durch Vergleichen des ersten und des zweiten angepassten Referenzbilds mit dem ersten und dem zweiten Zielvergleichsbild erhalten wird, und auf Grundlage der Histogramme dieser Bilder auf einen Wert zwischen 0 und 1 normiert werden und wobei das Gewicht gegen 0 konvergiert, wenn die Differenz zwischen einem angepassten Referenzbild und dem entsprechenden Zielvergleichsbild die größere ist, und das Gewicht gegen 1 konvergiert, wenn die Differenz zwischen einem angepassten Referenzbild und dem entsprechenden Zielvergleichsbild die kleinere ist.

7. Vorrichtung nach Anspruch 6, wobei die Bildklassifikationseinheit (112) ein Bild, in welchem Pixel in einem Histogramm relativ gleichmäßig von einem dunklen Gebiet zu einem hellen Gebiet angeordnet sind, als das Referenzbild setzt.

8. Vorrichtung nach Anspruch 6, wobei das Maskierungsbild ein Bild ist, welches einen Helligkeitsunterschied zwischen dem angepassten Referenzbild und dem Zielvergleichsbild repräsentiert, indem das angepasste Referenzbild und das Zielvergleichsbild für jedes Pixel verglichen werden.

9. Computerlesbares Aufzeichnungsmedium, umfassend ein Computerprogramm, welches, wenn es durch einen Computer ausgeführt wird, den Computer veranlasst, das Verfahren nach einem der Ansprüche 1 bis 5 auszuführen.

## Revendications

1. Procédé de traitement d'une image numérique, consistant :
(a) à obtenir (S100) une pluralité d'images comprenant une image de faible exposition, une image d'exposition normale et une image de forte exposition ;
(b) à convertir (S110) la pluralité d'images en histogrammes ;
(c) à définir l'image d'exposition normale en tant qu'image de référence et l'image de faible exposition et l'image de forte exposition en tant que première et seconde images cibles de comparaison respectivement ;
(d) à ajuster (S120) une distribution de l'histogramme de l'image de référence de sorte à être similaire à une distribution de l'histogramme de la première image cible de comparaison pour produire une première image de référence ajustée et une distribution de l'histogramme de l'image de référence de sorte à être similaire à une distribution de l'histogramme de la seconde image cible de comparaison pour produire une seconde image de référence ajustée ;
(e) à produire (S130) une première image de masquage correspondant à une différence pour chaque pixel entre la première image de référence ajustée et la première image cible de comparaison et une seconde image de masquage correspondant à une différence pour chaque pixel entre la seconde image de référence ajustée et la seconde image cible de comparaison ;
(f) à appliquer la première image de masquage à la première image cible de comparaison pour produire une première image cible de comparaison ajustée et la seconde image de masquage à la seconde image cible de comparaison pour produire une seconde image cible de comparaison ajustée, les première et seconde images cibles de comparaison ajustées étant obtenues à partir de la première et de la seconde image cible de comparaison respectivement en masquant et en supprimant dans ces dernières ces zones qui sont différentes des correspondantes à celles des première et seconde images de référence ajustées respectivement en fonction des première et seconde images de masquage, de telle sorte que seules les autres zones des première et seconde images cibles de comparaison restent dans les première et seconde images cibles de comparaison ajustées ; et
(g) à attribuer (S150) un poids respectif aux première et seconde images cibles de comparaison ajustées et, ensuite, à combiner l'image de référence et la première et la seconde image cible de comparaison ajustée en fonction de leur poids attribué respectif pour produire une image à plage dynamique élevée (HDR), dans lequel les poids respectifs sont déterminés comme étant une valeur de différence de chaque pixel, qui est obtenue en comparant les première et seconde images de référence ajustées et les première et seconde images cibles de comparaison respectivement, et sont normalisés de sorte à être une valeur comprise entre 0 et 1 sur la base des histogrammes de ces images et dans lequel le poids converge vers 0 au fur et à mesure que la différence entre une image de référence ajustée et l'image cible de comparaison correspondante est plus importante, et le poids converge vers 1 au fur et à mesure que la différence entre une image de référence ajustée et l'image cible de comparaison correspondante est plus petite.

2. Procédé selon la revendication 1, dans lequel l'étape (c) consiste à définir une image dans laquelle des pixels sont disposés de manière relativement uniforme depuis une zone sombre jusqu'à une zone claire sur un histogramme, en tant qu'image de référence.

3. Procédé selon la revendication 1, dans lequel l'image de masquage est une image qui représente une différence de luminosité entre l'image de référence ajustée et l'image cible de comparaison en comparant l'image de référence ajustée et l'image cible de comparaison pour chaque pixel.

4. Procédé selon la revendication 1, consistant en outre à supprimer le bruit dans l'image de masquage.

5. Procédé selon la revendication 4, dans lequel la suppression du bruit consiste à traiter une image en répétant au moins une fois une opération d'érosion, une opération de dilatation et une opération de lissage.

6. Appareil pour traiter une image numérique, comprenant : une unité d'obtention d'image (100) configurée pour obtenir une pluralité d'images, comprenant une image de faible exposition, une image d'exposition normale et une image de forte exposition ; une unité de conversion d'histogramme (111) configurée pour convertir la pluralité d'images en histogrammes ;
une unité de classification d'image (112) configurée pour définir l'image d'exposition normale en tant qu'image de référence et l'image de faible exposition et l'image de forte exposition en tant que première et seconde images cibles de comparaison respectivement ;
une unité d'ajustement d'histogramme (113) configurée pour ajuster une distribution de l'histogramme de l'image de référence de sorte à être similaire à une distribution de l'histogramme de la première image cible de comparaison pour produire une première image de référence ajustée et pour ajuster une distribution de l'histogramme de l'image de référence de sorte à être similaire à une distribution de l'histogramme de la seconde image cible de comparaison pour produire une seconde image de référence ajustée ;
une unité d'obtention d'image de masquage (120) configurée pour comparer une différence pour chaque pixel entre la première image de référence ajustée et la première image cible de comparaison pour produire une première image de masquage et pour comparer une différence pour chaque pixel entre la seconde image de référence ajustée et la seconde image cible de comparaison pour produire une seconde image de masquage ;
une unité d'ajustement d'image cible de comparaison (140) configurée pour appliquer la première image de masquage à la première image cible de comparaison pour produire une première image cible de comparaison ajustée et pour appliquer la seconde image de masquage à la seconde image cible de comparaison pour produire une seconde image cible de comparaison ajustée, les première et seconde images cibles de comparaison ajustées étant obtenues à partir de la première et de la seconde image cible de comparaison respectivement en masquant et en supprimant dans ces dernières ces zones qui sont différentes des correspondantes à celles des première et seconde images de référence ajustées respectivement en fonction des première et seconde images de masquage respectivement, de telle sorte que seules les autres zones des première et seconde images cibles de comparaison restent dans les première et seconde images cibles de comparaison ajustées ;
et dans lequel l'unité d'ajustement d'image cible de comparaison (140) attribue en outre un poids respectif aux images cibles de comparaison ajustées ; et
une unité de synthèse d'image à plage HDR (150) configurée pour combiner l'image de référence et les images cibles de comparaison ajustées respectives en fonction de leur poids attribué respectif pour produire une image à plage HDR, dans lequel les poids respectifs sont déterminés comme étant une valeur de différence de chaque pixel, qui est obtenue en comparant les première et seconde images de référence ajustées et les première et seconde images cibles de comparaison respectivement, et sont normalisés de sorte à être une valeur comprise entre 0 et 1 sur la base des histogrammes de ces images et dans lequel le poids converge vers 0 au fur et à mesure que la différence entre l'image de référence ajustée et l'image cible de comparaison est plus importante, et le poids converge vers 1 au fur et à mesure que la différence entre l'image de référence ajustée et l'image cible de comparaison est plus petite.

7. Appareil selon la revendication 6, dans lequel l'unité de classification d'image (112) définit une image dans laquelle des pixels sont disposés de manière relativement uniforme depuis une zone sombre jusqu'à une zone claire sur un histogramme, en tant qu'image de référence.

8. Appareil selon la revendication 6, dans lequel l'image de masquage est une image qui représente une différence de luminosité entre l'image de référence ajustée et l'image cible de comparaison en comparant l'image de référence ajustée et l'image cible de comparaison pour chaque pixel.

9. Support d'enregistrement lisible par ordinateur comprenant un programme d'ordinateur qui, lorsqu'il est exécuté par un ordinateur, contraint l'ordinateur à mettre en oeuvre le procédé selon l'une quelconque des revendications 1 à 5.
